Europäisches Patentamt

European Patent Office

Office européen des brevets

(19)

(11) Veröffentlichungsnummer : **0 143 877**
**B1**

(12) **EUROPÄISCHE PATENTSCHRIFT**

(45) Veröffentlichungstag der Patentschrift :
23.03.88

(21) Anmeldenummer : **84107254.9**

(22) Anmeldetag : **25.06.84**

(51) Int. Cl.⁴ : **C 08 L 83/04**// C08J3/06
,(C08L83/04, 83:04)

(54) **Stabile Siliconemulsionen.**

(30) Priorität : **02.07.83 DE 3323909**

(43) Veröffentlichungstag der Anmeldung :
**12.06.85 Patentblatt 85/24**

(45) Bekanntmachung des Hinweises auf die Patenterteilung : **23.03.88 Patentblatt 88/12**

(84) Benannte Vertragsstaaten :
**AT BE CH DE FR GB IT LI NL SE**

(56) Entgegenhaltungen :
**DE-A- 3 219 220
GB-A- 2 056 473
US-A- 4 277 382
Die Akte enthält technische Angaben, die nach dem Eingang der Anmeldung eingereicht wurden und die nicht in dieser Patentschrift enthalten sind.**

(73) Patentinhaber : **BAYER AG
Konzernverwaltung RP Patentabteilung
D-5090 Leverkusen 1 Bayerwerk (DE)**

(72) Erfinder : **Grape, Wolfgang, Dr.
Roggendorfstrasse 61
D-5000 Köln 80 (DE)**
Erfinder : **Saykowski, Franz, Dr.
Andreas-Gryphius-Strasse 1
D-5000 Köln 80 (DE)**
Erfinder : **Schlak, Ottfried, Dr.
Carl-Duisberg-Strasse 331
D-5090 Leverkusen (DE)**
Erfinder : **Würminghausen, Thomas, Dr.
Christian-Hess-Strasse 65
D-5090 Leverkusen (DE)**

**Beschreibung**

Gegenstand der vorliegenden Erfindung sind stabile wäßrige Siliconemulsionen, die nach Entfernung des Wassers unter Umgebungsbedingungen ein elastomeres Produkt ergeben.

Emulsionen von Organopolysiloxanen sind bereits seit einer Reihe von Jahren bekannt. Diese Emulsionen werden für Formtrennmittel, Anstrichmittel, Mittel zum Behandeln von Fasern und Web- und Wirkstoffen, Schaumverhütungsmittel und Glänzer verwendet.

Die Verfahren zur Herstellung solcher Emulsionen sind allgemein bekannt; es wird hierzu beispielhaft auf die US-A-2 891 920 verwiesen. Als eines der Probleme auf dem Gebiet der Silicone wird darin das Fehlen einer guten Methode zur Herstellung stabiler Emulsionen aus äußerst hochmolekularen Siloxanen angesehen. Zur Bildung von Schutzüberzügen ist aber gerade Voraussetzung, daß das verwendete Siloxan eine bestimmte Molekulargewichtsgrenze überschreitet. Polysiloxane mit einem derart hohen Molekulargewicht sind mit normalen Emulgiermethoden nicht in stabile Emulsionen überführbar. Dementsprechend gibt es bis heute praktisch keine Siloxanemulsionen zur Erzeugung von Schutzüberzügen. In erster Linie befaßt sich die obige US-PS mit einer Methode zur Polymerisation von Siloxanen in emulgiertem Zustand unter Verwendung starker Mineralsäuren oder stark alkalischer Katalysatoren, die in der Lage sind, Siloxanbindungen umzulagern.

Danach läßt sich eine solche Emulsionspolymerisation unter Einsatz kationischer, nichtionischer oder anionischer Dispergiermittel durchführen, wobei anionische Emulgiermittel für saure Katalysatoren und nichtionische Emulgiermittel sowohl für saure als auch für alkalische Katalysatoren verwendet werden. Die Emulsionen, die nach diesem Verfahren erhalten werden, sollen äußerst stabil sein und können ohne Auftrennung jahrelang gelagert werden. Die Emulsionen eignen sich gemäß dieser US-PS als Trennmittel und Beschichtungsmassen sowie als Zusätze zu Latexanstrichmitteln. Ein entscheidender Nachteil dieser Emulsionen gemäß US-A-2 891 920 besteht jedoch darin, daß es sich bei den in den Beispielen beschriebenen Emulsionen um reine Emulsionen von hydroxylendblockierten hochmolekularen Siloxanen handelt, die daher nach Entfernen des Wassers nicht zu einer stabilen zähen elastomeren Beschichtungsmasse aushärten können. Zur Herstellung einer solchen elastomeren Beschichtungsmasse ist ein verstärkend oder vernetzend wirkender Bestandteil erforderlich. Die nach obiger US-PS hergestellten Beschichtungen verfügen daher naturgemäß über eine unzureichende physikalische Festigkeit und zu geringe Haftung.

Bei dem Verfahren nach GB-A-1 024 024 wird ein in Wasser mit einer Alkylbenzolsulfonsäure emulgiertes Organosiloxan durch Erwärmen polymerisiert. Die Alkylbenzolsulfonsäure dient hierbei gleichzeitig als Emulgator und als Katalysator der hiernach durchgeführten Polymerisation. In obiger GB-A ist außerdem ein Verfahren angegeben, die Emulsionspolymerisation unter Mitverwendung kleiner Mengen von Alkoxysilanen, wie Methyltrimethoxysilan, Methyltriethoxysilan, Vinyltrimethoxysilan und Phenyltrimethoxysilan, durchzuführen.

Im DE-A-2 720 457 wird eine Siliconmasse beschrieben, die als Bindemittel zur Herstellung von Dichtungs- und Packungsmaterial verwendet werden kann. Die Siliconmasse besteht aus einem $\alpha$, $\omega$-Dihydroxydiorganopolysiloxan mit einer Viskosität von wenigstens 100 m Pas bei 25°, ungefähr damit vergleichbaren Mengen eines Silans der allgemeinen Formel R Si(OR')$_3$, einem Organometallkatalysator, einem Emulgiermittel und Wasser. Das Bindemittel gemäß dieser DOS kann sowohl direkt in Emulsion als auch in einer mit organischen Lösungsmitteln versetzten Emulsion angewendet werden. Über die Stabilität einer die oben angegebenen Bestandteile enthaltenden Emulsion wird allerdings keine Aussage getroffen.

In der US-A-3 355 406 sind Siliconlatices beschrieben, die aus einem langkettigen hydroxylendblockierten Siliconöl sowie einem verstärkend wirkenden Siliconharz bestehen. Dabei wird offensichtlich ein bereits vollständig ausgehärtetes Siliconharz eingesetzt, so daß eine Reaktion des Harzes mit dem Siliconöl zu einer homogenen elastomeren Beschichtungsmasse nicht zu erwarten ist.

In der DE-A-2 912 431 wird ein Organopolysiloxanlatex beschrieben, bei dessen Darstellung durch Emulsionspolymerisation eines cyclischen Organosiloxans zu einem OH-endblockierten langkettigen Siliconöl bereits vor der Polymerisation ein organofunktionelles Trialkoxysilan zugegeben wird. Es wird ausgeführt, daß eine Zugabe dieses letztgenannten Bestandteils nach erfolgter Emulsionspolymerisation in der Regel nicht zu der gewünschten Haftung und Bindung auf Unterlagen bei der Verwendung als Schutzüberzug führt. Die Menge an organofunktionellem Trialkoxysilan beträgt 0,1 bis 30 Gewichtsteile, vorzugsweise 1 bis 15 Gewichtsteile, bezogen auf 100 Gewichtsteile des linearen Organopolysiloxans. Bei zu geringer Menge Alkoxysilan wird die Haftung beeinträchtigt, bei größerer Menge als angegeben wird die Stabilität der Emulsion durch den bei der Hydrolyse der Alkoxygruppen gebildeten Alkohol herabgesetzt. Hier ist demnach keine stabile lagerfähige Emulsion gegeben, die vergleichbare Anteile Harz und Polymer enthält. In der DE-A-3 019 655 ist eine Siliconemulsion beschrieben, die sich nach Entfernen des Wassers unter Umgebungsbedingungen in ein elastomeres Produkt überführen läßt, und die durch einen Zusatz von 1 bis 150 Gewichtsteilen amorphen Siliciumdioxids, bezogen auf 100 Gewichtsteile eines hydroxylendblockierten Polydiorganosiloxans in Emulsionsform, gekennzeichnet ist. Das eingearbeitete Siliciumdioxid führt gemäß obiger DE-A dazu, daß eine derartige Siliconemulsion beim Trocknen einen gehärteten Film ergibt. Ein gravierendes Problem bei der Herstellung solcher verstärkter Siliconemulsionen ist die Einarbeitung des amorphen Siliciumdioxids in die Emulsion des hydroxylendgestoppten Siliconöls. Um eine homogene Einarbeitung des $SiO_2$ gewährleisten zu können, wird gemäß der DE-A-3 019 655 so vorgegangen, daß eine kolloidale Dispersion des $SiO_2$ mit der Emulsion des Siliconöls vermischt wird. Derartige kolloidale Dispersionen von Siliciumdioxid sind nicht sonderlich stabil, so daß der pH-Wert des Gemisches eine kritische Größe darstellt. Weiterhin ist zu befürchten, daß durch die mangelhafte Anbindung des $SiO_2$ an das OH-endblockierte Siliconöl die ausgehärtete Beschichtungsmasse selbst inhomogen wird.

Im DE-C-29 43 832 ist eine Siliconemulsion beschrieben, die sich von der eben erwähnten DOS 30 19 655 nur durch einen höheren Feststoffgehalt unterscheidet. Durch Zusetzen eines amorphen Siliciumdioxids zu einer Emulsion eines OH-endblockierten, langkettigen Siliconöls mit einen Feststoffgehalt größer als 60 % wird eine standfeste Emulsion erhalten, die als Fugendichtmasse Anwendung finden kann. Ein Nachteil der besprochenen Patentschrift ist, daß die fertige Emulsion nur bei einem pH-Wert oberhalb 9 stabil ist und dadurch, daß die pH-Werteinstellung mit einem Amin erfolgt, eine Geruchsbelästigung auftritt. Weiterhin weisen die in der DAS 29 43 832 beschriebenen Prüfergebnisse der in den Beispielen hergestellten Filme darauf hin, daß es sich um ein im wesentlichen unvernetztes Material handelt mit wenig elastischen Eigenschaften.

In der US-A-4,277,382 wird eine Polysiloxanzusammensetzung in Emulsionsform beschrieben, die als Glasfaserschlichte angewandt wird. Diese Schlichte besteht aus einem sog. « Siliconharz » mit mindestens zwei funktionellen Gruppen, z. B. einem OH-endgestoppten, linearen Polysiloxan, einem nichtharzartigen Silan sowie einem Katalysator. Die Hauptkomponenten — Siliconöl und Silan — werden getrennt voneinander emulgiert und anschließend als Emulsion vereinigt. Ein derartiges System hat jedoch den Nachteil, daß z. B. Methyltrimethoxysilan nicht ohne weiteres in eine stabile Emulsion überführt werden kann und somit das Gesamtsystem zu Vergelung neigt. Es muß daher ein spezieller Emulgator, ein Polycarbinolpolysiloxan, mitverwendet werden. Doch selbst durch diese Maßnahme ist die Lagerstabilität der Emulsion sehr begrenzt.

Es war Aufgabe der vorliegenden Erfindung, eine stabile Siliconemulsion, die in ein elastomeres Produkt überführbar ist, bereitzustellen.

Gegenstand der vorliegenden Erfindung ist somit eine unter Umgebungsbedingungen durch Abspaltung und Verdunsten von Wasser und Alkohol in ein elastomeres Produkt überführbare Siliconemulsion, gekennzeichnet durch folgende Bestandteile :

A) 100 Gew.-Teile eines mit Hydroxylgruppen endblockierten im wesentlichen linearen Polydiorganosiloxans und mit einem Molekulargewicht von über 50.000,

B) 1-400 Gew.-Teile eines niedermolekularen, reaktionsfähigen, acyloxy- bzw. alkoxyfunktionellen Siliconharzes wobei die Alkoxyfunktionalität bevorzugt ist,

C) 0,1-20 Gew.-Teile einer katalytisch wirksamen Verbindung, bevorzugt eines Alkylzinnsalzes,

D) 0-200 Gew.-Teile eines thixotropierenden Füllstoffes
und

E) 0-200 Gew.-Teile anderer nicht thixotropierender Füllstoffe,
wobei die Siliconemulsion über einen Feststoffgehalt von 20-85 Gew.-% verfügt.

Bei Entfernen des Wassers unter Umgebungsbedingungen reagieren vermutlich die Alkoxygruppen des Harzes mit den OH-Endgruppen des Siliconpolymers unter Wirkung eines Katalysators, so daß eine elastomere Beschichtungsmasse zurückbleibt. Je nach Verhältnis Harz zu Polymer läßt sich das gewünschte Eigenschaftsbild in weitem Rahmen variieren. Bei Erhöhung des Harzanteils erhält man eine zunehmend festere Beschichtungsmasse mit geringer Bruchdehnung, hohem Elastizitätsmodul und hoher Reißfestigkeit, die beispielsweise für Beschichtungen, selbst für begehbare Flächen, geeignet ist. Geringer Harzanteil ergibt Beschichtungsmassen mit hoher Bruchdehnung, geringem Modul und niedriger Reißfestigkeit, die — nach Versetzen mit Füllstoffen und Erreichen von Standfestigkeit gegebenenfalls durch Aufkonzentrieren — als Fugendichtmassen Anwendung finden können. Einer der Hauptvorteile der Erfindung ist also darin zu sehen, daß durch Variation der Mengenverhältnisse der beiden Hauptbestandteile zueinander ein weites Anwendungsspektrum abgedeckt wird. Dies wird dadurch erreicht, daß zwei getrennt hergestellte Siliconemulsionen, die jede für sich stabil sind, gemischt werden, wobei das Mischungsverhältnis äußerst variabel angesetzt werden kann. Vorteilhaft ist es hierbei, zusätzlich zu den beiden abzumischenden Siliconemulsionen eine Emulsion eines Katalysators, z. B. eines Alkylzinnsalzes, zuzufügen. Es ist allerdings auch möglich, die Zugabe des Härtungskatalysators erst direkt vor der Anwendung durchzuführen.

Es ist als überraschend anzusehen, daß sich aus niedermolekularen alkoxyfunktionellen Siliconharzen, wie sie erfindungsgemäß eingesetzt werden, stabile Emulsionen herstellen lassen, die so stabil sind, daß sie sogar ein Abmischen mit Emulsionen von langkettigen OH-endblockierten Siliconölen ohne Trennung oder Zersetzung überstehen.

Die Herstellung einer Emulsion eines langkettigen OH-endgestoppten Siliconöls durch Emulsionspolymerisation ist dem Fachmann im Prinzip geläufig. Beispielhaft wird hierzu auf die US-PS 2 891 910 sowie auf die GB-PS 1 024 024 verwiesen. Besonders bevorzugt ist das in der letztgenannten Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert, so daß im Anschluß die Katalysatoreigenschaften blockiert sind, während die Emulgiermitteleigenschaften voll erhalten bleiben, bzw. eher verbessert werden. Dementsprechend kann die Emulgiermittelkonzentration gering gehalten werden, und man hat nach Fertigstellung der Emulsion keine störenden Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer sowie anionischer Natur sein. Als anionische Co-Emulgatoren kommen insbesondere Salze der obengenannten n-Alkyl- oder Alkylbenzolsulfonsäuren in Frage. Nichtionogene Co-Emulgatoren sind Polyoxyethylenderivate von Fettalkoholen, Fettsäuren und dgl. Beispiele für derartige Emulgiermittel sind POE (3)-Laurylalkohol, POE (20)-Oleylalkohol, POE (7)-Nonylphenol oder POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt). Derartige nichtionogene Emulgiermittel sind dem Fachmann im Prinzip geläufig. Die zugesetzten Co-Emulgatoren erhöhen einerseits die Stabilität der nach der Emulsionspolymerisation resultierenden Emulsion, andererseits üben sie aber gleichzeitig einen Einfluß aus auf die Kettenlänge des bei der Polymerisation entstehenden langkettigen, OH-endgestoppten Siliconöls.

Im allgemeinen sind solche Siliconöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-endgestoppten Siliconöls erfolgt weiterhin über die Temperatur bei der Gleichgewichtsbildung zwischen Siloxan, Wasser und dem durch Ringöffnung des Siloxans zunächst gebildeten Silanol (bzgl. Einzelheiten zum Zusammenhang zwischen Temperatur und Molekulargewicht wird auf die Arbeit von D. R. Weyenberg et al, J. Polymer Sci. Part C, 27 pp 27-34 (1969)) verwiesen.

Besonders bevorzugt bei der Herstellung einer Emulsion eines langkettigen OH-endgestoppten Siliconöls ist das im folgenden beschriebene Verfahren.

Als Monomer wird Octamethylcyclotetrasiloxan ($D_4$) in einer solchen Menge eingesetzt, daß eine 40 %ige Emulsion resultiert. Die für die Emulsionspolymerisation katalytisch wirkende Sulfonsäure ist eine n-Alkylsulfonsäure. Von dieser Sulfonsäure werden 4 %, bezogen auf die $D_4$-Menge, eingesetzt. Als Co-Emulgatoren dienen das Na-Salz der als Katalysator verwendeten Sulfonsäure sowie POE (5)-Laurylalkohol. Die Temperatur bei der Emulsionspolymerisation beträgt 60°, neutralisiert wird mit Triethanolamin.

Die Herstellung der eingesetzten alkoxyfunktionellen Siliconharze ist bekannt und erfolgt durch Reaktion von Alkyl- und/oder Arylchlorsilanen mit Alkohol und Wasser (vgl. z. B. GB-A-685 173, DE-C-958 702, FR-A-1 475 709, US-A-3 668 180, DE-B-2 061 189, DE-A-2 444 529, DE-B-2 532 887, EP-B-3610, DE-A-3 000 782).

Das erfindungsgemäß besonders bevorzugte Methyl-Methoxy-Siliconharz wird durch Reaktion von Methyltrichlorsilan mit Methanol und Wasser hergestellt. Gegebenenfalls können auch Mischungen von Methyltrichlorsilan und anderen Alkyl- und/oder Arylchlorsilanen und/oder Tetrachlorsilan für die Herstellung der alkoxyfunktionellen Siliconharze verwendet werden, ohne daß die Stabilität der erfindungsgemäßen Emulsion darunter leidet. Ebenso können auch Mischungen verschiedener Alkohole für die Harzherstellung verwendet werden und/oder verschiedene alkoxyfunktionelle Siliconharze miteinander vermischt werden, ohne daß die Stabilität der erfindungsgemäßen Emulsion dadurch beeinträchtigt wird. Jedoch ist aufgrund des Eigenschaftsbildes und der Wirtschaftlichkeit die Verwendung von Methyltrichlorsilan und Methanol für die Herstellung des alkoxyfunktionellen Siliconharzes bevorzugt.

Die Emulsionen auf Wasserbasis der oben beschriebenen Siliconharze werden durch Anwendung einer Kombination von Emulgiermitteln hergestellt. Bevorzugt wird dabei eine Kombination zweier nichtionischer Emulgatoren eingesetzt. Derartige Emulgiermittel sind Polyoxyethylenderivate von Fettalkoholen, z. B. POE (4)-Laurylalkohol, POE (10)-Ethylalkohol, POE (20)-Stearylalkohol, POE (2)-Oleylalkohol, POE (20)-Oleylalkohol u. a., Polyoxyethylenderivate von Fettsäuren, z. B. POE-Laurat, POE-Stearat, POE-Oleat u. a., Polyoxyethylensorbitanfettsäureester, z. B. POE (20)-Sorbitanmonolaurat, POE (70)-Monopalmitat, POE (4)-Monostearat, POE (20)-Sorbitanstearat, POE (5)-Sorbitanmonooleat u. a., Polyoxyethylenderivate von mehrwertigen Alkoholen, z. B. POE-Triglycerid, Polyoxyethylenderivate des Nonylphenols, z. B. POE (10)-Nonylphenol, POE (20)-Nonylphenol u. a., Sorbitanfettsäureester, z. B. Sorbitanmonolaurat, Sorbitantristearat u. a., und dergleichen mehr.

Die Menge an Emulgiermitteln, die zur Emulgierung von jeweils 100 Gew.-Teilen Siliconharz benötigt wird, kann in einem weiten Bereich in Abhängigkeit von den Verfahrensbedingungen und der Auswahl der restlichen Bestandteile der Emulsion variieren. Bei der erfindungsgemäßen Herstellung der Emulsionen von niedermolekularen alkoxyfunktionellen Siliconharzen ist die Menge an Emulgiermitteln, die benötigt wird, in erster Linie abhängig von dem Gehalt an Alkoxygruppen im alkoxyfunktionellen Siliconharz. Eine Emulgatormenge von 10 Gew.-Teilen bezogen auf 100 Gew.-Teile Siliconharz ist aber im allgemeinen ausreichend zur Herstellung einer lagerstabilen Emulsion eines niedermolekularen alkoxyfunktionellen Siliconharzes. Besonders bevorzugt ist der Einsatz einer Kombination von nichtionischen Emulgiermitteln ; insbesondere werden mit einer Kombination der nichtionischen Emulgiermittel POE (40)-Triglycerid/POE (2)-Oleylalkohol oder einer Kombination der nichtionischen Emulgiermittel POE (40)-Triglycerid/POE (6)-Tridecylalkohol stabile Emulsionen aus niedermolekularen alkoxyfunktionellen Siliconharzen hergestellt. Es sind aber auch andere Kombinationen aus nichtionischen Emulgiermitteln einsetzbar. Diese nichtionischen Emulgiermittel sind dem Fachmann im Prinzip geläufig (vgl. z. B. Stache, Tensidtaschenbuch, Hanser Verlag ; MC Cutchen's Detergents & Emulsifiers, North American Edition, 1979).

Es ist weiterhin möglich, eines der beiden eingesetzten nichtionischen Emulgiermittel durch entweder ein kationisches oder ein anionisches Emulgiermittel zu ersetzen, und also eine Kombination eines nichtionischen Emulgiermittels mit einem kationischen oder einem anionischen Emulgiermittel zu verwenden.

Als Emulgierhilfsmittel können alle dem Fachmann geläufigen Emulgierhilfsmittel eingesetzt werden. Besonders bevorzugt sind verdickend wirkende Emulgierhilfsmittel und hier insbesondere das Natriumsalz der Carboxymethylcellulose. Es können aber auch andere Emulgierhilfsmittel wie z. B. längerkettige Alkohole, Polyvinylalkohole, Harnstoff usw. verwendet werden. Der Zusatz eines Emulgierhilfsmittels in der beschriebenen Art ist insbesondere bevorzugt bei der Emulgierung eines niedermolekularen alkoxyfunktionellen Siliconharzes mit hohem Alkoxygehalt und niedriger Viskosität.

Die Methoden (vgl. z. B. E. Manegold, Emulsionen ; P. Becher, Emulsions, Theory & Practice New York 1965, Chapter 7) zur Herstellung von Emulsionen sind dem Fachmann im Prinzip ebenfalls geläufig. Die Reihenfolge der Zugabe der Bestandteile ist im allgemeinen nicht entscheidend. Wegen der Hydrolyseempfindlichkeit der niedermolekularen alkoxyfunktionellen Siliconharze ist im Falle der Emulgierung derartiger Harze diejenige Methode bevorzugt, bei der eine die Emulgier- und Emulgierhilfsmittel enthaltende wäßrige Lösung vorgelegt wird und das alkoxyfunktionelle Harz in diese Lösung eingetragen wird. Das Einsetzen von mechanischen Emulgierhilfen kann ebenfalls erwünscht sein. Zu derartigen mechanischen Emulgierhilfen gehören zum Beispiel schnellaufende Rührer (Ultraturrax), aber auch Druckemulgiermaschinen und Kolloidmühlen (z. B. erhältlich von der Fa. Manton-Gaulin).

Das Abmischen der beiden wie beschrieben getrennt hergestellten Emulsionen erfolgt durch einfaches Verrühren. Das Mischungsverhältnis, in dem die beiden getrennt hergestellten Emulsionen miteinander verrührt werden, ist dabei nicht kritisch. Das Mischungsverhältnis wird bei der Herstellung der erfindungsgemäßen Abmischung jeweils im Einzelfall dem Anwendungsbereich angepaßt werden.

Gerade durch das erfindungsgemäße Vorgehen kann das gewünschte Eigenschaftsbild der ausgehärteten Siliconbeschichtungsmasse in weitem Rahmen variiert werden. Bei Erhöhung des Harzanteils erhält man eine zunehmend festere Beschichtungsmasse mit geringer Bruchdehnung, hohem Elastizitätsmodul und hoher Reißfestigkeit, die beispielsweise für Beschichtungen geeignet ist. Ein geringer Harzanteil ergibt Beschichtungsmassen mit hoher Bruchdehnung, geringem Modul und niedriger Reißfestigkeit.

Die Feststoffgehalte der beiden getrennt hergestellten Emulsionen sowie der Feststoffgehalt der Abmischung der beiden getrennt hergestellten Emulsionen sind nicht kritisch. Entweder können die später gewünschten Feststoffgehalte schon bei der Herstellung berücksichtigt werden, oder aber es wird durch Aufkonzentrieren oder Verdünnen der Abmischung der gewünschte Feststoffgehalt nachträglich eingestellt. Ist eine Anwendung der Abmischung als Fugendichtmasse erwünscht, ist ein hoher Feststoffgehalt bevorzugt. Desweiteren kann zusätzlich die erfindungsgemäße Abmischung durch Einrühren von Füllstoffen standfest gemacht werden, was insbesondere bei der oben erwähnten Anwendung als Fugendichtmasse vonnöten ist.

Als katalytisch wirksame Substanzen eignen sich solche, die in der Literatur für Kondensations- und Umesterungsreaktionen beschrieben sind. Dabei ist bevorzugt, der erfindungsgemäßen Abmischung zweier getrennt hergestellter Siliconemulsionen eine Emulsion eines die spätere Haftung auf einem Substrat oder die spätere Aushärtung fördernden Mittels zuzusetzen, z. B. Alkylzinnsalze. Die erfindungsgemäße Abmischung von Emulsionen kann so nach der bevorzugten Ausführungsform direkt nach der Herstellung mit einer Emulsion eines Alkylzinnsalzes abgemischt werden. Es ist allerdings auch möglich, die Zugabe einer Härteremulsion erst direkt vor der gewünschten Anwendung durchzuführen.

Als derartige Zusätze eignen sich z. B. die bekannten Alkylzinnsalze, wie z. B. Dibutylzinndilaurat, Dialkylzinndistearat, Dialkylzinndioktoat, Dialkylzinnmaleinat u. a.

Die erfindungsgemäßen Abmischungen von Siliconemulsionen werden hauptsächlich zur Herstellung von Imprägnierungen und Beschichtungen eingesetzt.

Sie eignen sich z. B. zur Beschichtung von Kunststoffen wie z. B. Polyurethan, Holz, Mauerwerk usw. Sie sind bewitterungsstabil, überdecken selbst Risse im Trägermaterial und machen die Oberfläche wasserabweisend. Auch Gewebe jeder Art können mit diesen Emulsionen ausgerüstet werden.

Desweiteren ist es möglich, durch Einrühren von Füllstoffen in die erfindungsgemäßen Abmischungen von Emulsionen standfeste Emulsionen zu erhalten, die als Fugendichtmassen einsetzbar sind. Dafür sind Emulsionen von ca. 60 % Feststoffgehalt oder größer bevorzugt. Derartige Füllstoffe sind Kieselsäuren, die natürlich vorkommen, die pyrogen erzeugt oder gefällt sein können, und/oder andere besonders feinteilige Füllstoffe wie z. B. gemahlene Dolomite oder gefällte Kreiden. Entscheidend ist ein ausreichend thixotroper Effekt, der es erlaubt, die Pasten ohne großen Kraftaufwand zu extrudieren und die Pasten dennoch an senkrechten Fugen zu verwenden. Als Kieselsäuren kommen in Betracht Materialien mit einer Oberfläche zwischen etwa 50 $m^2/g$ bis 300 $m^2/g$ (nach BET). Als weitere nicht-thixotropierende Füllstoffe können verschiedene Kreidesorten gebraucht werden, die in erster Linie zur Verbilligung der Paste beitragen. Andere Füllstoffe sind z. B. Rußsorten, Titandioxid, Tonsorten, Aluminiumoxid, Quarz, Kunststoffpasten, Zinkoxid oder Glimmer und gegebenenfalls Pigmente.

Außerdem können weitere Zusätze in die erfindungsgemäße Masse eingerührt werden, wie sie für Materialien dieser Art bisher beschrieben worden sind, z. B. Trimethylsiloxypolydimethylsiloxane, organische Weichmacher oder Extender, Entschäumer, Haftvermittler, Fungizide oder andere biologisch aktive Wirkstoffe, Duftstoffe, wobei diese Komponenten gegebenenfalls als Emulsionen zugesetzt werden.

Der Gegenstand der vorliegenden Erfindung soll nunmehr an Hand von Beispielen noch näher erläutert werden (% Angaben beziehen sich — soweit nicht anders vermerkt ist — auf Gew.-%).

## Beispiel 1

Herstellung einer Emulsion eines langkettigen, OH-endblockierten Siliconöls.

1,5 kg Natrium n-Alkylsulfonat und 1,5 kg POE (5)-Laurylalkohol werden in je 1,5 kg Wasser gelöst. Die Emulgatorlösungen werden mit 1,5 kg Sulfonsäure und 56 kg Wasser vermischt. 35 kg Octamethylcyclotetrasiloxan werden mit einem schnellaufenden Rührer in die wäßrige Phase eingerührt. Die Voremulsion wird mit Hilfe einer Hochdruckemulgiermaschine 2 x bei 200 bar homogenisiert. Die Emulsion wird 2 h bei 80 °C und anschließend 24 h bei 60 °C gerührt.

Nach Abkühlen auf Raumtemperatur wird mit 1,5 kg einer 50 %igen wäßrigen Triethanolaminlösung neutralisiert. Es resultieren 100 kg einer stabilen Emulsion mit einem Feststoffgehalt von ca. 40 % (bestimmt nach DIN 53 182).

## Beispiel 2

Herstellung eines Methylmethoxysiliconharzes

10 Mol Methanol werden mit 5,5 Mol Wasser gemischt und mit einem Tropftrichter bei 30 °C Anfangstemperatur langsam zu einem Gemisch aus 6 Mol Methyltrichlorsilan und 400 g Xylol, das in einem Dreihalskolben intensiv gerührt wird, zugetropft.

Durch den Aufsatzkühler entweicht gasförmiges HCl. Das Reaktionsgemisch kühlt sich stark ab. Nach Zugabe der wäßrigen Methanollösung wird das Reaktionsgemisch auf 40 °C erwärmt und ein Gemisch aus Methanol und HCl im Vakuum abdestilliert. Restliches HCl wird mit wasserfreier Soda neutralisiert und anschließend das Lösungsmittel bei 30 mbar bis 135 °C Sumpftemperatur abdestilliert. Nach Abkühlung und Filtration erhält man eine klare farblose Flüssigkeit mit einer Viskosität von 50 mPa · s bei 25 °C. Die Zusammensetzung des so hergestellten Methyl-Methoxy-Siliconharzes entspricht der Bruttoformel

$$CH_3Si(O)_{1,1}(OCH_3)_{0,8}$$

## Beispiel 3

Emulgierung des wie unter 2 hergestellten Methyl-Methoxy-Siliconharzes

55,1 kg Wasser werden vorgelegt. Unter Rühren werden bei Raumtemperatur portionsweise 0,9 kg Carboxymethylcellulose Na-Salz zugegeben. Die Mischung wird 4 Stunden lang gerührt, bis eine homogene Mischung entstanden ist. Nacheinander werden 3,2 kg Polyoxyethylen (40)-triglycerid und 0,8 kg Polyoxyethylen (2)-Oleylalkohol zugefügt und eingerührt. Innerhalb 30 Minuten werden 40 kg des im Beispiel 2 hergestellten Harzes zudosiert.

Es wird weitere 20 Minuten mit einem schnellaufenden Rührer nachgerührt.

Mit einer Hochdruckemulgiermaschine wird 5 mal bei 200 bar homogenisiert.

Die so hergestellte Emulsion ist trotz des hohen Alkoxygehaltes des alkoxyfunktionellen, niedermolekularen Siliconharzes länger als 6 Monate stabil.

## Beispiel 4

Abmischen der in Beispiel 1 und Beispiel 3 hergestellten Emulsionen

20 kg der Emulsion aus Beispiel 1, 20 kg der Emulsion aus Beispiel 3 und 3 kg einer 10 %igen Emulsion von Dibutylzinndilaurat in Wasser werden 1 Stunde lang miteinander verrührt.

Die so hergestellte Mischung ist länger als 6 Monate lagerstabil.

## Beispiel 5

Anwendungstechnische Daten einer aus der Emulsion aus Beispiel 4 hergestellten Beschichtung (Emulsion wird als dünne Schicht auf einer Unterlage verteilt und trocknen gelassen)

Physikalische Eigenschaften nach DIN 53 504

| | |
|---|---|
| Bruchdehnung | 185 % |
| Elastizitätsmodul 100 % | 0,75 [MPa] |
| Zugfestigkeit | 0,81 [MPa] |

## Beispiel 6

Herstellung einer 60 %igen Emulsion eines langkettigen, OH-endblockierten Siliconöls

1 800 g Octamethylcyclotetrasiloxan und 40 g Dodecylbenzolsulfonsäure werden unter Rühren zusammengemischt. Anschließend werden 1 200 g entionisiertes Wasser zugegeben. Der gesamte Ansatz wird 1 Stunde bei Raumtemperatur gerührt und danach 2 mal bei 200 bar mit Hilfe einer Hochdruckemulgiermaschine homogenisiert.

Anschließend werden weitere 40 g Dodecylbenzolsulfonsäure zugefügt und auf 85 °C aufgeheizt. Man rührt 2 h bei 85 °C, läßt dann auf 60 °C abkühlen und rührt 72 h bei dieser Temperatur. Nach Abkühlen auf Raumtemperatur wird durch Zutropfen einer 50 %igen Triethanolaminlösung neutralisiert.

## Beispiel 7

Herstellung einer 60 %igen Emulsion des niedermolekularen alkoxyfunktionellen Siliconharzes aus Beispiel 2.

17 kg Wasser werden unter Rühren auf 60 °C erwärmt. Nacheinander werden bei 60 °C 2,4 kg Polyoxyethylentriglycerid und 0,6 kg POE (2)-Oleylalkohol zugegeben. Nach Abschalten der Heizvorrichtung werden 30 kg des alkoxyfunktionellen Siliconharzes aus Beispiel 2 innerhalb 1/2 h zugetropft.

Anschließend wird 15 Minuten nachgerührt und 9 x bei 200 bar mit Hilfe einer Hochdruckemulgiermaschine homogenisiert.

## Beispiel 8

Herstellen einer Fugendichtmasse

25,7 kg der Emulsion aus Beispiel 6, 3,2 kg der Emulsion aus Beispiel 7 und 0,6 kg einer 10 %igen Emulsion von Dibutylzinndilaurat werden 1 Stunde lang miteinander verrührt. In diese Mischung werden nacheinander eingerührt :

6,5 kg Kreide Omya BLR 3

1,7 kg pyrogene Kieselsäure mit der mittleren Oberfläche nach BET von 300 $m^2/g$

Physikalische Eigenschaften der klebfreien Probekörper nach DIN 53 505 und DIN 53 504

Shore A-Härte 25

E-Modul 100 % 0,25 [MPa]

Zugfestigkeit 0,32 [MPa]

Bruchdehnung 340 %

## Beispiel 9

Herstellen einer 40 %igen Harzemulsion

56 kg Wasser werden unter Rühren auf 60 °C erwärmt. Als Emulgatoren werden 3,2 kg Polyolyethylen (40) Triglycerid und 0,8 kg Polyolyethylen (2) Oleylalkohol nacheinander eingerührt. 36 kg des in Beispiel 2 hergestellten Harzes und 4 kg γ-Glycidyl-oxypropyltrimethoxysilan werden miteinander verrührt und gemeinsam innerhalb 30 Minuten zu der wäßrigen Emulgatorlösung zugegeben.

Es wird 30 Minuten lang nachgerührt, anschließend wird 9 mal bei 200 bar homogenisiert.

## Beispiel 10

Herstellen einer Fugendichtmasse

30,9 kg der Emulsion aus Beispiel 6, 1,5 kg der Emulsion aus Beispiel 9 und 0,7 kg einer 10 %igen Emulsion von Dioctylzinnmaleinat werden 1 h lang miteinander verrührt. In diese Mischung werden nacheinander eingerührt :

0,1 kg einer 30 %igen Siliconentschäumeremulsion

8,1 kg Kreide Omya BLR 3

0,1 kg einer 30 %igen Siliconentschäumeremulsion

1,8 kg pyrogene Kieselsäure mit der mittleren Oberfläche nach BET von 150 $m^2/g$

Physikalische Eigenschaften der klebfreien Probekörper nach DIN 53 505 und 53 504 :

Shore-A-Härte 22

E-Modul 100 % 0,302 (MPa)

Zugfestigkeit 0,962 (MPa)

Bruchdehnung 670 %

## Patentansprüche

1. Unter Umgebungsbedingungen durch Abspaltung bzw. Verdunstung von Wasser und Alkohol bzw. Carbonsäure in ein elastomeres Produkt überführbare Siliconemulsion, gekennzeichnet durch folgende Bestandteile :

A) 100 Gew.-Teile eines mit Hydroxylgruppen endblockierten Polydiorganosiloxans mit einem Molekulargewicht von über 50.000,

B) 1-400 Gew.-Teile eines niedermolekularen, reaktionsfähigen, acyloxy- bzw. alkoxyfunktionellen Siliconharzes,

C) 0,1-20 Gew.-Teile einer katalytisch wirksamen Verbindung,

D) 0-200 Gew.-Teile eines thixotropierenden Füllstoffes und

E) 0-200 Gew.-Teile anderer, nicht-thixotropierender Füllstoffe, wobei die Siliconemulsion über einen Feststoffgehalt von 20-85 Gew.-% verfügt.

2. Emulsion gemäß Anspruch 1, gekennzeichnet durch folgende Bestandteile :

A) 100 Gew.-Teile eines OH-endblockierten Polydiorganosiloxans

B) 50 bis 200 Gew.-Teile eines niedermolekularen alkoxyfunktionellen Siliconharzes

C) 0,1 bis 20 Gew.-Teile eines Alkylzinnsalzes und

D) 0 bis 20 Gew.-Teile eines thixotropierenden Füllstoffs wobei die Siliconemulsion über einen Feststoffgehalt von 30 bis 60 % Gew.-% verfügt.

3. Emulsion nach Anspruch 1 oder 2, gekennzeichnet durch folgende Bestandteile :

A) 100 Gew.-Teile eines OH-endblockierten Polydiorganosiloxans

B) 1 bis 90 Gew.-Teile eines niedermolekularen alkoxyfunktionellen Siliconharzes

C) 0,1 bis 20 Gew.-Teile eines Alkylzinnsalzes

D) 2,5 bis 200 Gew.-Teile eines thixotropierenden Füllstoffs

E) 0 bis 200 Gew.-Teile anderer nicht-thixotropierender Füllstoffe, wobei die Gesamtabmischung über einen Feststoffgehalt von 60-85 Gew.-% verfügt.

4. Verwendung von Emulsionen nach einem der Ansprüche 1 bis 3 als Beschichtungs- oder Fugendichtmasse.

## Claims

1. A silicone emulsion which may be converted into an elastomeric product under ambient conditions by elimination and evaporation of water and alcohol or carboxylic acid, characterized by the following constituents :

A) 100 parts by weight of a hydroxyl-terminated polydiorganosiloxane having a molecular weight of 50,000,

B) 1 to 400 parts by weight of a low molecular weight, reactive acyloxy- or alkoxyfunctional silicone resin,

C) 0.1 to 20 parts by weight of a catalytically active compound,

D) 0 to 200 parts by weight of a thixotropicizing filler and

E) 0 to 200 parts by weight of other non-thixotropicizing fillers, the silicone emulsion having a solids content of 20 to 85 % by weight.

2. An emulsion as claimed in Claim 1, characterized by the following constituents :

A) 100 parts by weight of an OH-terminated polydiorganosiloxane

B) 50 to 200 parts by weight of a low molecular weight alkoxyfunctional silicone resin

C) 0.1 to 20 parts by weight of an alkyl tin salt and

D) 0 to 20 parts by weight of a thixotropicizing filler, the silicone emulsion having a solids content of from 30 to 60 % by weight.

3. An emulsion as claimed in Claim 1 or 2, characterized by the following constituents :

A) 100 parts by weight of an OH-terminated polydiorganosiloxane

B) 1 to 90 parts by weight of a low molecular weight alkoxyfunctional silicone resin

C) 0.1 to 20 parts by weight of an alkyl tin salt

D) 2.5 to 200 parts by weight of a thixotropicizing filler

E) 0 to 200 parts by weight of other non-thixotropicizing fillers, the mixture as a whole having a solids content of 60 to 85 % by weight.

4. The use of the emulsions claimed in any of Claims 1 to 3 as coating compositions or joint sealing compounds.

## Revendications

1. Emulsion de silicone convertible en un produit élastomère dans les conditions de l'environnement par scission et/ou évaporation d'eau et d'alcool ou d'acide carboxylique, caractérisée par les constituants suivants :

A) 100 parties en poids d'un polydiorganosiloxanne bloqué par des groupes terminaux hydroxy, à un poids moléculaire supérieur à 50 000,

B) 1 à 400 parties en poids d'une résine de silicone réactive à bas poids moléculaire, à fonctions acyloxy ou alcoxy,

C) 0,1 à 20 parties en poids d'un composé à activité catalytique,

D) 0 à 200 parties en poids d'une matière de charge conférant des propriétés thixotropiques, et

E) 0 à 200 parties en poids d'autres matières de charge ne conférant pas de propriétés thixotropiques, l'émulsion de silicone étant à une teneur en matières solides de 20 à 85 % en poids.

2. Emulsion selon la revendication 1, caractérisée par les constituants suivants :

A) 100 parties en poids d'un polydiorganosiloxanne bloqué par des groupes terminaux OH,

B) 50 à 200 parties en poids d'une résine de silicone à bas poids moléculaire à fonctions alcoxy,

C) 0,1 à 20 parties en poids d'un sel d'alkyl-étain, et

D) 0 à 20 parties en poids d'une matière de charge conférant des propriétés thixotropiques, l'émulsion de silicone étant à une teneur en matières solides de 30 à 60 % en poids.

3. Emulsion selon la revendication 1 ou 2, caractérisée par les constituants suivants :

A) 100 parties en poids d'un polydiorganosiloxanne bloqué par des groupes terminaux OH,

B) 1 à 90 parties en poids d'une résine de silicone à bas poids moléculaire à fonctions alcoxy,

C) 0,1 à 20 parties en poids d'un sel d'alkyl-étain,

D) 2,5 à 200 parties en poids d'une matière de charge conférant des propriétés thixotropiques,

E) 0 à 200 parties en poids d'autres matières de charge ne conférant pas de propriétés thixotropiques, le mélange total étant à une teneur en matières solides de 60 à 85 % en poids.

4. Utilisation des émulsions selon l'une des revendications 1 à 3 en tant que masses de revêtement ou d'étoupage de joints.